# EUROPÄISCHE PATENTSCHRIFT

(11) **EP 3 749 880 B1**
(45) Veröffentlichungstag und Bekanntmachung des Hinweises auf die Patenterteilung: **06.04.2022**
(21) Anmeldenummer: 19703308.7
(22) Anmeldetag: 05.02.2019
(51) Int. Cl.: F16H 3/72, F16H 57/10, F16H 57/04

(54) **ANTRIEBSVORRICHTUNG MIT DREHZAHLLIMITIERUNG**
DRIVE DEVICE WITH SPEED LIMITATION
DISPOSITIF D'ENTRAÎNEMENT AYANT UNE LIMITATION DE LA VITESSE DE ROTATION

(30) Priorität: 09.02.2018 DE 202018100711 U
(43) Veröffentlichungstag der Anmeldung: 16.12.2020
(73) Patentinhaber: Voith Patent GmbH, 89522 Heidenheim (DE)
(72) Erfinder: STOLZ, Tobias, 74589 Satteldorf (DE); VOGEL, Peter, 74564 Crailsheim (DE); SEEBERGER, Tobias, 91550 Dinkelsbühl (DE)
(74) Vertreter: Voith Patent GmbH - Patentabteilung
(86) Internationale Anmeldenummer: PCT/EP2019/052707
(87) Internationale Veröffentlichungsnummer: WO 2019/154777

(56) Entgegenhaltungen:
- WO-A1-2016/100991
- DE-A1- 3 430 456
- DE-A1- 19 951 735
- DE-A1-102014 210 868
- DE-A1-102015 218 345
- US-A- 4 768 401

## Beschreibung

Die Erfindung betrifft eine Antriebsvorrichtung umfassend ein Überlagerungsgetriebe, eine Hauptantriebsmaschine, die mit einer Eingangswelle des Überlagerungsgetriebes verbunden ist, einen oder mehrere Hilfsantriebe, einen hydrodynamischen Retarder zum Abbremsen des Hilfsantriebes und eine Ausgangswelle des Überlagerungsgetriebes, die mit einer Arbeitsmaschine verbunden werden kann; wobei das Überlagerungsgetriebe ein Planetengetriebe aufweist mit einem Hohlrad, einem Sonnenrad, einem Planetenträger und mehreren Planetenrädern, wobei die Eingangswelle mit dem Hohlrad, die Ausgangswelle mit dem Sonnenrad und der oder die Hilfsantriebe über zumindest je eine Getriebestufe mit konstanter Übersetzung mit dem Planetenträger verbunden sind und wobei der Retarder mit einem Hilfsantrieb verbunden ist.

Bei einem Überlagerungsgetriebe werden allgemein zwei Wellen des Planetengetriebes durch voneinander unabhängige Antriebe so angetrieben, dass die Drehzahlen an der dritten Welle, der Ausgangswelle, addiert oder subtrahiert werden. Ist einer der Antriebe regelbar, dann kann so eine stufenlose Drehzahlregelung für die Ausgangswelle erreicht werden.

Aus dem Stand der Technik sind Antriebsvorrichtungen mit einem Überlagerungsgetriebe bekannt, bei dem eine Hauptantriebsmaschine über die Eingangswelle das Hohlrad eines Planetengetriebes und ein regelbarer Hilfsantrieb über eine Getriebestufe den Planetenträger antreibt, während die Arbeitsmaschine über die Ausgangswelle mit der Sonne verbunden ist. Durch eine solche Antriebsvorrichtung kann die Drehzahl an der Ausgangswelle in einem recht großen Drehzahlbereich stufenlos eingestellt werden und das bei konstant laufender Hauptantriebsmaschine.

Des Weiteren ist es möglich, den Hauptantrieb lastfrei anzuschleppen, indem der Hilfsantrieb beim Hochlaufen jeweils die Drehzahl der Hauptantriebsmaschine einprägt. Erst wenn der Hauptantrieb in der Nähe der Nenndrehzahl ist und damit ein hohes Drehmoment aufbringen kann, wird die Last langsam beschleunigt, indem die Kompensation der Drehzahl durch den Hilfsantrieb reduziert wird.

Genutzt werden solche Antriebsvorrichtungen insbesondere zum Antreiben von Pumpen, Verdichtern oder Kompressoren mit großer Leistung, wie sie zum Beispiel in der Öl- und Gasindustrie oder in thermischen Kraftwerken verwendet werden.

Eine solche Antriebsvorrichtung, zusätzlich mit einer Bremsvorrichtung ausgerüstet, die mit einem Hilfsantrieb verbunden ist, ist in DE 102014210868 A1 gezeigt. Als mögliche Ausführung für die Bremsvorrichtung ist allgemein auch ein hydrodynamischer Retarder erwähnt. Wobei die Bremsvorrichtung darin ausschließlich zum Abbremsen oder Stillsetzen der Ausgangswelle vorgesehen ist. Ein Retarder umfasst zwei Schaufelräder, von denen eines mit dem Gehäuse drehfest verbunden ist, während das zweite Schaufelrad mit einer rotierenden Welle verbunden ist. Wird nun der von den Schaufelrädern gebildete Arbeitsraum mit Öl gefüllt, entsteht darin eine Umlaufströmung die ein Bremsmoment auf das rotierende Schaufelrad erzeugt.

Nicht zufriedenstellend gelöst ist dabei das Problem, dass der Hilfsantrieb und das Getriebe beschädigt werden können, wenn der Hilfsantrieb im Betrieb ausfällt oder vom Netz getrennt werden muss. Ein solcher Ausfall kann auftreten, wenn ein sogenannter Blackout - ein kompletter Netzausfall - eintritt oder wenn Fehler an einem der Antriebe oder an einer der Schaltanlagen eine Abschaltung verursachen. Da in den oben genannten Anwendungsfällen meist die Massenträgheit der Hauptantriebsmaschine viel größer ist als die der angetriebenen Arbeitsmaschine, wird selbst bei Ausfall oder Abschaltung des Antriebsmomentes an der Hauptantriebsmaschine die Drehzahl der Arbeitsmaschine schnell gegen Null gehen. Aufgrund des Drehzahlgleichgewichtes am Planetengetriebe wird in dieser Getriebevariante der Planetenträger und der Hilfsantrieb stark beschleunigt. Dabei können unzulässige Drehzahlen am Planetenträger und an weiteren Systemkomponenten auftreten. Und noch kritischer ist es, wenn der Hauptantrieb in Betrieb bleibt, während der Hilfsantrieb ausfällt. Dann erfolgt eine noch schnellere Beschleunigugn des Hilfsantriebes. Die im Stand der Technik beschriebene Bremseinrichtung am Hilfsantrieb ist nicht geeignet, dieses kritische Beschleunigen der Hilfsantriebe und des Planetenträgers bei einem Ausfall der Energieversorgung zuverlässig zu verhindern. Die Aufgabe der Erfindung ist es nun, eine verbesserte Lösung für das obengenannte Problem zu finden. Wobei die Lösung kostengünstig umsetzbar sein soll.

Für die Vorrichtung wird die Aufgabe durch eine Antriebsvorrichtung gemäß Anspruch 1 gelöst. Weitere vorteilhafte Merkmale der erfindungsgemäßen Ausführung, die die Vorrichtung weiter verbessern, finden sich in den entsprechenden Unteransprüchen. Die Vorrichtung ist dadurch gekennzeichnet, dass der Retarder parallel zu einem für die Antriebsvorrichtung vorhandenen Schmierölsystem eingebunden ist, wobei die Vorrichtung eine Zulaufleitung umfasst, die von einem Schmierölsystem abzweigt und zum Retarder führt, und eine Rücklaufleitung umfasst, die vom Retarder zum Schmierölsystem führt und in dieses mündet, wobei in der Zulaufleitung ein Ventil vorgesehen ist, derart dass es bei Schnellabschaltung oder Ausfall der Energieversorgung eines der Antriebe die Zulaufleitung freigeben kann und somit der Retarder mit Öl gefüllt werden kann, ohne dass eine externe Energieversorgung nötig ist.

Unter parallel zum Schmierölsystem ist hier zu verstehen, dass ein Öl-Teilstrom aus dem Schmierölsystem abgezweigt, durch die Ölversorgung des Retarders geleitet und in das Schmierölsystem zurückgeführt wird. Das Schmierölsystem umfasst zumindest eine Schmierölpumpe und ein Leitungsstück von dem die Zulaufleitung abzweigt und in das die Rücklaufleitung mündet.

Optional umfasst das Schmierölsystem eine oder mehrere weitere Komponenten, wie beispielsweise einen Ölfilter, einen Wärmetauscher zur Kühlung, eine Drossel.

Der Vorteil einer solchen erfindungsgemäßen Lösung ist, dass damit zuverlässigauch im oben beschriebenen Störfall - eine Überdrehzahl am Planetenträger, dem schwächsten Glied in der Antriebsvorrichtung, vermieden werden kann. Somit sind besonders die Planetenbolzen vor einer Beschädigung durch zu hohe Fliehkräfte geschützt. Gleichzeitig ist es eine kostengünstige Lösung, die das verwendete Öl wieder zurück in den Schmierölkreislauf führt.

Ein weiterer Vorteil ist, dass der Retarder aufgrund der hydrodynamischen Wirkungsweise ein parabolisches Bremsverhalten aufweisen kann, das heißt dass das Bremsmoment bei hoher Differenzdrehzahl hoch ist und dann abnimmt, je mehr der Hilfsantrieb gebremst wird. Dadurch wird der Hilfsantrieb nicht unnötig stark abgebremst, sondern nur soweit bis die Gefahr der Überdrehzahl nicht mehr gegeben ist. Die Bremse ist außerdem verschleißfrei und damit sehr wartungsfreundlich. Ein zusätzlicher Vorteil ist, dass der Retarder gut im explosionsgefährdeten Bereich eingesetzt werden kann. Im Gegensatz zu Reibbremsen führt der Retarder die beim Bremsen entstehende Wärmeenergie zuverlässig und kontrolliert über das Öl ab. Explosionsschutz-Vorgaben sind vor allem im Marktbereich Öl und Gas vorhanden. Diese Anlage kann mit der entwickelten Lösung selbst dann zuverlässig heruntergebremst werden, wenn der Antrieb mit seiner Wicklungstemperatur den zulässigen Temperaturschwellwert überschritten hat und keine Abbremsung über den Frequenzumformer mehr möglich ist.

Die Anordnung ist gut geeignet für hohe Drehzahlen am Abtrieb, wie sie beispielsweise bei schnelllaufenden Kompressoren oder bei großen Ventilatoren gefordert sind, weil dadurch der Bauraum und das Gewicht der Antriebsvorrichtung relativ gering gehalten werden können. Besonders vorteilhaft ist die erfinderische Ausführung, wenn die Hauptantriebsmaschine nur drehzahlkonstant betreibbar ist und der oder die Hilfsantriebe drehzahlgeregelt betreibbar sind und insbesondere der oder die Hilfsantriebe als Niederspannungsmotoren ausgeführt sind. Ein Großteil der Antriebsleistung kann von der konstant betriebenen Hauptantriebsmaschine aufgebracht werden. Diese benötigt keinen Frequenzumformer, was Investitionskosten spart. Bevorzugt wird die Hauptantriebsmaschine als Mittelspannungsmotor ausgeführt, also mit einer Spannung von mehr als 1 kV. Die Drehzahlregelung erfolgt über die Hilfsantriebe, die eine geringere Leistung benötigen und die bevorzugt als Niederspannungsmotoren mit einer Spannung von weniger als 1 kV ausgeführt sind. Somit fallen die dafür benötigten Frequenzumformer kleiner und kostengünstiger aus.

Unter einer Getriebestufe wird eine Triebverbindung verstanden, die mit konstanter Übersetzung also festem Drehzahlverhältnis Leistung und Drehmoment überträgt.

Zudem kann über eine insbesondere einstellbare Drossel in der Rücklaufleitung zwischen Retarder und Schmierölsystem der Rückfluss an Öl kontrolliert werden. Somit kann der zeitliche Verlauf des Bremsverhaltens beeinflusst werden. Über den Durchfluss am Retarder kann die notwendige Wärmeabfuhr aus dem Retarder im Störfall, das heißt bei Betrieb des Retarders, gewährleistet werden. Weiterhin ist es vorteilhaft, ein Rückschlagventil in der Rücklaufleitung vorzusehen, so dass sich die Strömungsrichtung in den Leitungen immer in der gewünschten Weise einstellt.

Ein weiterer Vorteil der erfindungsgemäßen Ausführung ist, dass auch ein eventuell auftretender Rückwärtslauf über längere Zeit abgebremst werden kann. So ein Rückwärtslauf kann zum Beispiel bei Pumpen oder Kompressoren auftreten, wenn diese abgestellt sind oder heruntergefahren werden. Dabei ist es nötig den Rückwärtslauf bei stehender Hauptantriebsmaschine abzubremsen, da auch hierbei sonst eine unzulässige Überdrehzahl an bestimmten Komponenten auftreten kann. Besonders gut wird das in einer Ausführung mit elektrisch angetriebener Schmierölpumpe erreicht.

Bevorzugt wird die Rücklaufleitung vom Retarder so angeordnet, dass sie vor einem im Schmierölsystem vorhandenen Wärmetauscher in die Leitung des Schmierölsystems mündet. Das ist besonders vorteilhaft, wenn beispielsweise zusätzlich zum Aktivieren des Retarders bei einem der obengenannten Störfälle auch ein Einsatz des Retarders während des normalen Betriebes der Antriebsvorrichtung als verschleißfreie Bremse vorgesehen ist.

Von Vorteil ist es, wenn das Ventil zum Füllen des Retarders zwei Schaltstellungen aufweist, eine erste, bei der die Zulaufleitung zum Retarder gesperrt ist und eine zweite Schaltstellung, bei der die Zulaufleitung zum Retarder freigegeben ist, wobei das Ventil so ausgeführt ist, dass es im Normalbetrieb in der ersten Schaltstellung ist und bei Ausfall oder Unterbrechung der Energieversorgung des Ventils in die zweite Schaltstellung geht. Das heißt dass das Ventil im Normalbetrieb geschlossen ist und bei Störfall in die Offen-Stellung geht, so dass der Retarder durch die Füllung mit Öl aktiviert wird. Beispielsweise kann das über eine Rückstellfeder am Ventil erreicht werden. Insbesondere ist das Ventil als 2/2-Wegeventil ausgeführt.

Weiterhin vorteilhaft ist, wenn in der Rücklaufleitung zumindest eine einstellbare Drossel und/oder zumindest ein Rückschlagventil vorhanden ist. Dadurch kann die Öldurchsatzmenge im Retarder und somit die Temperaturentwicklung im Retarder gezielt beeinflusst werden. Das Rückschlagventil verhindert unerwünschte Rückströmungen. Zudem ist die Bremscharakteristik mit beeinflussbar.

Um eine Überhitzung des Überlagerungsgetriebes zu vermeiden, ist es von Vorteil, wenn der Retarder außerhalb des Getriebegehäuses des Überlagerungsgetriebes angeordnet ist.

Bevorzugt ist der Retarder derart mit dem Hilfsantrieb verbunden ist, dass er die gleiche Drehzahl wie der Hilfsantrieb hat, insbesondere ist er direkt mit der Hilfsantriebswelle verbunden, also ohne Getriebestufe dazwischen. Dadurch wird eine gute Bremswirkung durch den Retarder erreicht und es ist vom Bauraum her vorteilhaft.

Bei einer weiteren vorteilhaften Ausführung ist in der Ölversorgung für den Retarder eine Zwischenleitung vorhanden, die die Zulaufleitung vor dem Ventil mit der Rücklaufleitung derart verbindet, dass während des Betriebs der Antriebsvorrichtung dauerhaft etwas Öl durch die Zwischenleitung strömen kann, auch wenn der Retarder nicht aktiviert ist. Diese Zwischenleitung, die einen Kurzschluss zwischen Zulauf und Rücklauf bildet, ist vor allem bei langen Leitungswegen zwischen Schmierölsystem und Retarder sinnvoll, um die Ölversorgung des Retarders auch bei längerer Inaktivität luftfrei zu halten und einen gewissen Frostschutz zu bieten. In der Zwischenleitung kann zudem eine Drossel vorgesehen sein, um den Durchfluss zu begrenzen.

In einer weiteren erfindungsgemäßen Vorrichtung ist zur Entleerung des Retarders einer Ablaufleitung vorhanden, über die Öl aus dem Retarder in einen Ölsumpf abgelassen werden kann.

Besonders bevorzugt ist zusätzlich zur Zulaufleitung eine separate Schmierölleitung zum Retarder vorgesehen, die so ausgeführt ist, dass dauerhaft während des Betriebs der Antriebsvorrichtung etwas Öl aus dem Schmierölsystem durch den Retarder fließt. Auch diese zusätzlich abzweigende Schmierölleitung kann eine Drossel aufweisen. Die Schmierung des Retarders ist mit der dargestellten Leitungsführung unabhängig vom Betrieb des Retarders gewährleistet. Die Schmierölleitung kann zusätzlich oder alternativ, falls keine Schmierung beispielsweise wegen Fremdlagerung nötig ist, dazu dienen, im Normalbetrieb also ohne Bremsen immer etwas Öl durch den Retarder zu führen. So wird Wärme, die durch die Leerlaufverluste entsteht, zuverlässig abgeführt. Und es wird durch diese kleine Ölmenge der Leerlaufverlust reduziert.

Vorteilhafterweise ist im Leitungsstück des Schmierölsystems zwischen dem Abzweig der Zulaufleitung aus dem Schmierölsystem und der Mündung der Rücklaufleitung in das Schmierölsystem eine Drossel vorhanden. So kann die Verteilung der Durchflussmengen auf das Leitungsstück im Schmierölsystem und auf die Ölversorgung des Retarders eingestellt werden. Die Drossel ist insbesondere beim Aktivieren des Retarders wichtig. Durch die Drossel wird das Druckgefälle zwischen Zulauf und Rücklauf erhöht, so dass der Retarder mit Öl gefüllt wird, solange bis er selbstansaugend wirkt.

Besonders bevorzugt ist eine Schmierölpumpe im Schmierölsystem der Antriebsvorrichtung vorhanden, die derart mit einer der Wellen der Antriebsvorrichtung mechanisch gekoppelt ist, insbesondere mit einer der Wellen des Planetengetriebes, dass sie auch bei Ausfall oder Unterbrechung der Energieversorgung für die Antriebsvorrichtung weiter angetrieben wird, solange sich die Welle dreht, und dadurch die Ölversorgung des Retarders füllen kann.

Alternativ zur mechanischen Verbindung mit einer der Wellen kann die Schmierölpumpe auch mit einem Motor mit einer unterbrechungsfreien Stromversorgung verbunden sein. Auch so ist die zuverlässige Versorgung des Retarders mit Öl im Störungsfall gewährleistet.

Bevorzugt ist der Retarder derart mit dem Hilfsantrieb verbunden, dass er die gleiche Drehzahl wie der Hilfsantrieb hat. Zum Beispiel kann er direkt mit einer Hilfsantriebswelle verbunden sein. Der Hilfsantrieb weist meist eine höhere Drehzahl wie der Planetenträger auf und der Retarder hat bei hoher Drehzahl eine bessere Bremswirkung. Dadurch ist ein stärkeres Abbremsen möglich oder es kann ein kleinerer Retarder verwendet werden, als wenn der Retarder an einer Stelle bei niedrigerer Drehzahl eingebaut wird.

Eine weitere Erhöhung der Betriebssicherheit ist möglich, wenn die Antriebsvorrichtung so ausgeführt ist, dass von den drei Drehzahlen: die der Hauptantriebsmaschine, die der Ausgangswelle und die des Hilfsantriebes zumindest zwei Drehzahlen erfasst oder gemessen werden können, insbesondere mit Hilfe von Impulsgeber am Antrieb und/oder Drehzahlsensoren. Dadurch kann auch die dritte der Drehzahlen bestimmt werden, selbst wenn sie nicht gemessen wird. Somit lassen sich Fehler frühzeitig erkennen, und auf Störfälle kann schnell oder sogar vorausschauend reagiert werden.

Nachfolgend wird beschrieben, wie im Störfall mit einer erfindungsgemäßen Antriebsvorrichtung eine unerwünschte Überdrehzahl am Hilfsantrieb, am Planetenträger oder an weiteren Systemkomponenten vermieden werden kann.

Zunächst muss ein Ausfall oder eine Schnellabschaltung der Hauptantriebsmaschine oder eines Hilfsantriebes erkannt werden, insbesondere anhand eines Störungssignals. Das Erkennen eines Ausfalls oder einer Schnellabschaltung, wobei hiervon auch ein bevorstehender Ausfall oder eine bevorstehende Schnellabschaltung mit umfasst ist, kann beispielsweise über die Antriebssteuerung und/oder über Signale aus der Stromversorgung, insbesondere bei Ausfall des Versorgungsnetzes oder Auslösen von Sicherungseinrichtungen oder Not-Aus-Einrichtungen, erfolgen. Ebenso können Fehler- oder Störmeldungen verwendet werden.

Zur Erkennung eines Ausfalls beziehungsweise einer unzulässig hohen Drehzahl wird bevorzugt eine Drehzahlmessung am Planetenträger oder an einem oder mehreren Hilfsantrieben vorgesehen. Die Messung kann über Drehzahlsensoren an geeigneter Stelle oder über Impulsgeber an den Antrieben erfolgen. Die Auslösung des Abbremsvorgangs erfolgt, wenn eine bestimmte Drehzahlgrenze erreicht oder überschritten wird. Diese Drehzahlgrenze ist von der zulässigen maximalen mechanischen Grenzdrehzahl vorgegeben.

Insbesondere ist es von Vorteil, wenn ein bevorstehender Ausfall der Hilfsantriebe bereits vor Eintritt erkannt werden kann. Dazu können beispielsweise Temperaturobergrenzen für die Wicklungstemperatur und/oder für die Lagertemperatur eines oder mehrerer Antriebe durch einen oder mehrere Temperatursensoren überwacht werden.

Weiterhin können zur Erkennung eines Ausfalls oder bevorstehenden Ausfalls zusätzlich aktuelle Beschleunigungswerte aus den gemessenen oder ermittelten Drehzahlen verwendet werden. So kann beim Auftreten besonderer Gradienten in der Drehzahl ein Ausfall erkannt werden.

Bei Erkennen eines entsprechenden Störfalles wird der Retarder durch Umschaltung des vorgesehenen Ventils, das die Verbindung zum Retarder freigibt, mit Öl gefüllt. Die Umschaltung kann beispielsweise über eine Relaisschaltung oder eine speicherprogrammierbare Steuerung erfolgen. Wird die Energiezufuhr unterbrochen fällt das Relais selbsttätig in die gewünschte Schaltstellung.

Der zumindest teil-gefüllte Retarder führt zum Abbremsen des Hilfsantriebes und des über zumindest eine Getriebestufe damit verbundenen Planetenträgers. Die Füllmenge wird entsprechend der gewünschten Brems-Charakteristik gesteuert, beispielsweise über die einstellbare Drossel im Rücklauf. Das Abbremsen der Antriebsvorrichtung muss dabei nicht unbedingt bis zum Stillstand erfolgen. In gewissen Grenzen kann mit dem Retarder auch ein Notbetrieb bei reduzierter Drehzahl ermöglicht werden. So kann beispielsweise bei Ausfall der Hilfsantriebe der Retarder das nötige Stützmoment aufbringen, um die noch in Betrieb befindliche Hauptantriebsmaschine so abzubremsen, dass ein niedrigerer Lastpunkt mit der Antriebsvorrichtung gehalten werden kann.

Anhand von Ausführungsbeispielen werden weitere vorteilhafte Ausprägungen der Erfindung erläutert unter Bezugnahme auf die Zeichnungen. Die Figuren zeigen im Einzelnen:
- **Fig.1**: erfindungsgemäße Antriebsvorrichtung
- **Fig.2**: erfindungsgemäße Antriebsvorrichtung mit Anbindung an das Stromversorgungsnetz
- **Fig.3**: Details zur erfindungsgemäßen Anbindung des Retarders an ein Schmierölsystem für die Antriebsvorrichtung

Nachfolgend werden die Figuren detaillierter beschrieben. Gleiche Bezugszahlen bezeichnen gleiche beziehungsweise analoge Bauteile oder Komponenten.

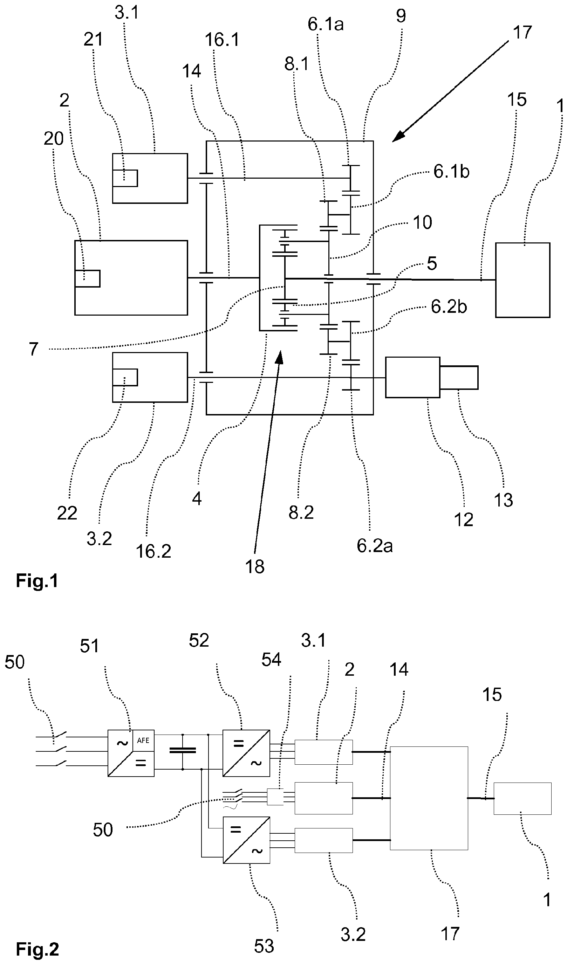

In **Fig.1** ist eine erfindungsgemäße Antriebsvorrichtung gezeigt, die über die Ausgangswelle 15 an die Arbeitsmaschine 1 angebunden ist. An einer solchen Vorrichtung kann das erfindungsgemäße Verfahren zur Drehzahllimitierung vorteilhaft eingesetzt werden. Das Überlagerungsgetriebe 17 weist ein Gehäuse 9 auf und umfasst ein Planetengetriebe 18. Die Eingangswelle 14 verbindet die Hauptantriebsmaschine 2 mit dem Hohlrad 4 des Planetengetriebes und die Ausgangswelle 15 verbindet das Sonnenrad 7 mit der Arbeitsmaschine 1. Die dritte Welle des Überlagerungsgetriebes wird durch die Hilfsantriebswellen 16.1 und 16.2 gebildet. Diese verbinden über die Getriebestufe 6.1a/b und 6.2a/b die Hilfsantriebe 3.1 und 3.2 mit dem Planetenträger 10. Der Planetenträger 10 trägt zum einen die Planetenräder 5 über die Planetenbolzen und zum anderen ist er mit einer Außenverzahnung als Zahnrad ausgebildet, das mit den jeweiligen Zahnrädern 8.1, 8.2 kämmt und so eine weitere Getriebestufe bildet. Die Zahnräder 8.1 und 6.1b sowie 8.2 und 6.2b sind bevorzugt als sogenanntes Stufenrad ausgebildet. Das Zahnrad auf dem Planetenträger 10 kann auch gefügt sein, es muss nicht unbedingt einteilig aus dem Planetenträger gebildet sein. Im dieser Figur ist die bevorzugte Variante für die Getriebestufe nämlich in Form einer Stirnradstufe dargestellt. Weiterhin ist diese Ausführung mit zwei Hilfsantrieben 3.1 und 3.2 ausgestattet; die Erfindung kann aber auch mit nur einem Hilfsantrieb oder mit mehreren, zum Beispiel drei Hilfsantrieben umgesetzt werden. Wichtig ist, dass die Hilfsantriebe über zumindest eine Getriebestufe 6.1a/b, 6.2a/b, 8.1, 8.2 mit konstanter Übersetzung mit dem Planetenträger 10 gekoppelt sind.

Die Hilfsantriebe 3.1, 3.2 sind als regelbare Motoren mit kleinerer Leistung und die Hauptantriebsmaschine 2 als Motor mit höherer Leistung aber konstanter Drehzahl ausgeführt. Bevorzugt können die Hilfsantriebe als Niederspannungsmotoren ausgeführt werden, da sie oft nur ca. 10 bis 30% der gesamten Antriebsleistung haben. Somit fallen auch die notwendigen Frequenzumformer und die sonstigen Komponenten zur Regelung kleiner und günstiger aus. Die Hauptantriebsmaschine 2 ist bei vielen Anwendungen als Mittelspannungsmotor ausgeführt, um insgesamt die benötigte Leistung zu liefern, und kann ohne Regelung ausgeführt werden. Solche Antriebsvorrichtungen sind besonders interessant bei hohen Leistungen von mehreren MW, wie sie bei schnelllaufenden Pumpen, Kompressoren oder Ventilatoren in der Öl- und Gasindustrie oder in thermischen Kraftwerken vorkommen. Über die Drehzahl und Drehrichtung der Hilfsantriebe 3.1, 3.2 kann die Drehzahl an der Ausgangswelle 15 um einen gewissen Anteil erhöht oder erniedrigt werden. Die Grenzen dieses Bereiches bei maximaler Drehzahl der Hilfsantriebe 3.1, 3.2 einmal in positiver und einmal in negativer Drehrichtung geben den möglichen Regelbereich vor.

Fällt nun einer der Antriebe 2, 3.1, 3.2 aufgrund einer Störung aus oder wird eine Schnellabschaltung, insbesondere des Hauptantriebes 2, eingeleitet, so fällt die Drehzahl an der Arbeitsmaschine schnell ab, da deren Massenträgheit in diesen Anwendungen sehr viel kleiner ist, als die der Antriebsmotoren 2, 3.1, 3.2. Da die Massenträgheit der Hilfsantriebe 3.1, 3.2 auch noch kleiner ist als die der Hauptantriebsmaschine 2, werden der Planetenträger 10 und die Hilfsantriebe 3.1, 3.2 im Störungsfall durch das schnelle Auslaufen der Arbeitsmaschine 1 und das langsame Auslaufen der Hauptantriebsmaschine 2 beschleunigt. Wird dabei eine unzulässig hohe Drehzahl erreicht, können die Hilfsantriebe 3.1, 3.2 und besonders die Planetenräder 5 und deren Bolzen beschädigt werden. Eine sichere Auslegung des Planetengetriebes 18 auf diesen besonderen Störfall würde die Antriebsvorrichtung unnötig groß und teuer machen.

Durch das Vorsehen eines Retardes 12 mit einer erfindungsgemäßen Anbindung an ein Schmierölsystem der Antriebsvorrichtung kann das Problem gelöst werden. Die Ölversorgung 13 des Retarders ist so ausgebildet, dass der Retarder 12 auch im Störfall mit Öl gefüllt werden kann, und somit die Hilfsantriebe 3.1,3.2 und der Planetenträger 10 im Störfall zuverlässig abgebremst werden können. Eine unzulässige Überdrehzahl wird sicher verhindert.

Dabei muss das Abbremsen nicht unbedingt bis zum Stillstand erfolgen. Es kann in manchen Fällen ein Notbetrieb bei reduzierter Drehzahl aufrecht erhalten werden, beispielsweise wenn die Hilfsantriebe 3.1,3.2 ausfallen und die Hauptantriebsmaschine 2 weiter in Betrieb ist. Dabei bringt der Retarder 12 das nötige Stützmoment auf, um die Hauptantriebsmaschine 2 zu bremsen, und so gemäß Drehzahl-/ Drehmoment-Kennlinie des Retarders 12 einen niedrigeren Lastpunkt halten zu können. Die Ölversorgung 13 des Retarders muss auf den Notbetrieb entsprechend ausgelegt werden.

Des Weiteren können Drehzahlsensoren 20, 21, 22 an den Antrieben 2, 3.1, 3.2 vorgesehen sein. Diese können beispielsweise durch die Impulsgeber der Motoren gebildet werden. Alternativ oder zusätzlich kann ein Drehzahlsensor am Zahnrad der Getriebestufe 6.1a/b, 6.2a/b, ein Drehzahlsensor am Zahnrad des Planetenträgers 10 oder ein Drehzahlsensor an der Ausgangswelle 15 vorhanden sein. Somit sind Varianten angegeben, mit denen alle Drehzahlen der Antriebe und die des Planetenträgers gemessen werden können. Letztendlich ist es allerdings ausreichend, wenn zwei dieser Drehzahlen gemessen werden, denn die übrigen Drehzahlen können dann über die Drehzahlgleichung des Planetengetriebes 18 und über die Übersetzungen bestimmt werden. Es sind somit nicht alle genannten Drehzahlsensoren gleichzeitig nötig.

Die Bestimmung der Drehzahlen und insbesondere die Kenntnis über deren Verläufe im Störfall bieten den Vorteil, dass damit bestimmt werden kann, wie die Bremscharakteristik und der Bremsverlauf ausgelegt werden muss. Diese können über die Steuerung der Füllung der Retarders 12 beeinflusst werden.

**Fig.2** stellt ein Gesamtsystem mit der erfindungsgemäßen Antriebsvorrichtung, mit der Arbeitsmaschine 1 und der Anbindung ans Energieversorgungsnetz 50 dar. Die Antriebsvorrichtung umfasst ein Überlagerungsgetriebe 17 mit Eingangswelle 14 und Ausgangswelle 15, einen Hauptantrieb 2 und zwei Hilfsantriebe 3.1, 3.2. Der Hauptantrieb 2 ist über eine Schaltvorrichtung 54 ans Energieversorgungsnetz 50 angebunden und wir mit konstanter Drehzahl betrieben. Die Hilfsantriebe 3.1, 3.2 sind über einen Wechselrichter 52, 53 und eine entsprechende Energieversorgungseinheit 51 am Netz 50 angebunden. Über die Wechselrichter 52, 53 können die Hilfsantriebe drehzahlvariabel betrieben werden.

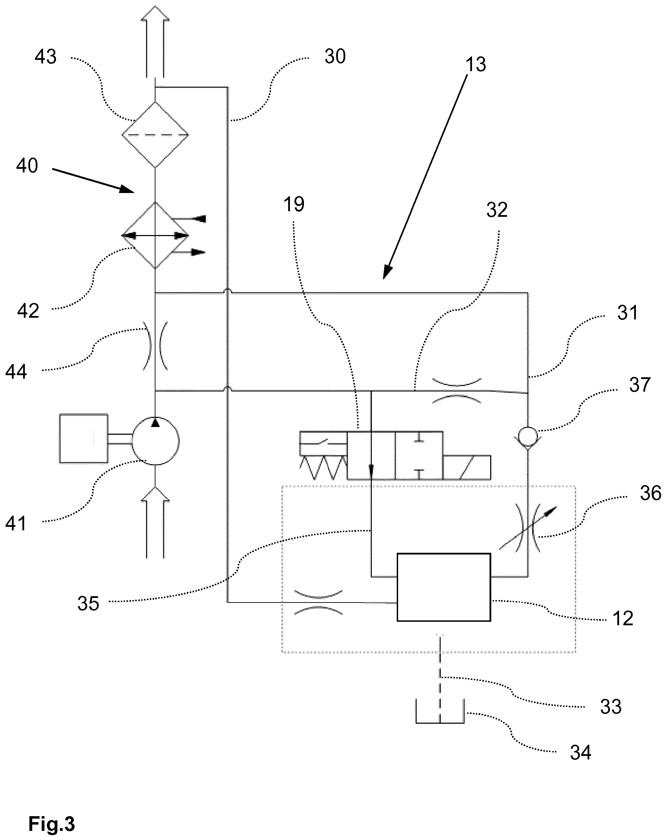

In **Fig.3** ist schematisch und als Ausschnitt die Ölversorgung 13 für den Retarder 12 einer erfindungsgemäßen Antriebsvorrichtung und die Anbindung an das Schmierölsystem 40 dargestellt. Die Anbindung an das Schmierölsystem 40 kann vor oder nach einem Schmierölwärmetauscher 42 oder einem Schmierölfilter 43 angeordnet sein. Die Zulaufleitung 35 führt über das Ventil 19 zum Retarder 12 und die Rücklaufleitung 31 führt vom Retarder 12 wieder ins Schmierölsystem 40.

Die Aktivierung des Retarders 12 erfolgt im Störfall über die Öffnung des Ventils 19. Über die Leitung 35 wird der Retarder 12 mit Öl gefüllt, sobald das Ventil 19 den Durchgang freigibt. Beispielsweise kann das Ventil 19 als 0/1-Ventil oder als 2/2- Wegeventil, wie hier gezeigt, ausgeführt werden. Die Temperaturentwicklung im Retarder und die Bremsdauer können über die in der Rücklaufleitung 31 befindliche einstellbare Drossel 36 beeinflusst werden.

Die Ansteuerung des Ventils 19 kann elektrisch, pneumatisch oder hydraulisch erfolgen, insbesondere durch ein Relais oder eine speicherprogrammierbare Steuerung. Bevorzugt ist das Ventil 19 so ausgeführt, dass die Ruheposition ohne Energieversorgung die Position zur Freigabe des Durchgangs ist. Das kann beispielsweise über eine Rückstellfeder erreicht werden. So ist immer gewährleistet, dass der Retarder 12 im Störungsfall gefüllt wird. In der anderen Schaltstellung des Ventils 19 ist die Zulaufleitung 35 gesperrt.

Der Druck und Volumenstrom zur Füllung des Retarders 12 wird ausschließlich über die Schmierölpumpe 41 im Schmierölkreislauf aufgebaut. Um die Füllung zu kontrollieren können eine einstellbare Drossel 36 und ein Rückschlagventil 37 in der Rücklaufleitung 31 vorgesehen werden. Der Antrieb der Schmierölpumpe 41 kann elektrisch über einen Motor, bevorzugt mit unterbrechungsfreier Stromversorgung erfolgen. Oder die Schmierölpumpe 41 ist mechanisch mit einer Welle der Antriebsvorrichtung bevorzugt des Planetengetriebes 17 verbunden und zwar derart, dass die Pumpe angetrieben wird, solange das Planetengetriebe 18 sich noch dreht, also auch bei stehender Hauptantriebsmaschine 2.

Um die Füllung des Retarders 12 zu unterstützen und ein ausreichendes Druckgefälle zwischen Zulauf 35 und Rücklauf 31 aufzubauen, solange bis der Retarder 12 selbstansaugend wirkt, ist es hilfreich, eine Drossel 44 im Leitungsstück des Schmierölsystems 40 zwischen den Abzweigstellen des Zulaufs und Rücklaufs vorzusehen.

Im Falle dass der Retarder 12 auch bei Normalbetrieb als verschleißfreie Bremse eingesetzt werden soll, ist es von Vorteil, wenn sowohl die Zulaufleitung 35 als auch die Rücklaufleitung 31 in Strömungsrichtung vor dem Wärmetauscher 42 angeordnet sind. Dadurch kann das aus dem Retarder 12 zurückgeführte Öl gekühlt werden.

Zusätzlich ist in der dargestellten Variante eine abzweigende Schmierölleitung 30 zum Retarder vorhanden, auch diese kann eine Drossel aufweisen. Bevorzugt ist die Abzweigung der Schmierölleitung 30 nach dem Ölfilter 43 angeordnet. Die Schmierung des Retarders 12 ist mit der dargestellten Leitungsführung unabhängig vom Betrieb des Retarders gewährleistet. Die Schmierölleitung 30 kann zusätzlich oder alternativ, falls keine Schmierung beispielsweise wegen Fremdlagerung nötig ist, dazu dienen, im Normalbetrieb also ohne Bremsen immer etwas Öl durch den Retarder 12 zu führen. So wird Wärme, die durch die Leerlaufverluste entsteht, zuverlässig abgeführt. Und es wird durch diese kleine Ölmenge der Leerlaufverlust reduziert.

Des Weiteren ist eine optionale Zwischenleitung 32 dargestellt, die dafür sorgt, dass auch bei inaktivem Retarder 12 also bei geschlossenem Ventil 19 eine gewisse Ölmenge durch einen Teil der Zulaufleitung 35 und einen Teil der Rücklaufleitung 31 fließt. Das ist vor allem dann vorteilhaft, wenn die Leitungslänge zwischen dem Schmierölsystem 40 und dem Retarder 12 sehr groß ist, weil dadurch ein gewisser Frostschutz und eine Entlüftungsfunktion erreicht werden. Die Zwischenleitung 32 kann eine Drossel enthalten, mit der die Durchflussmenge reduziert wird, beziehungsweise mit der eine ausreichende Zuflussmenge in den Retarder 12 bei geöffnetem Ventil 19 gewährleistet wird.

Über die Entleerungsleitung 33 kann der Retarder 12 zudem geleert werden, auch wenn kein Öl in den Schmierölkreislauf zurückgeführt werden kann oder soll. Das Öl wird in den Ölsumpf 34 abgeleitet.

### Bezugszeichenliste

- 1: Arbeitsmaschine
- 2: Hauptantriebsmaschine
- 3.1, 3.2: Hilfsantrieb
- 4: Hohlrad
- 4.1: Ritzel
- 5: Planetenräder
- 6.1a,6.1b, 6.2a,6.2b: Stirnräder einer Getriebestufe
- 7: Sonnenrad
- 8.1,8.2: Stirnräder einer weiteren Getriebestufe
- 9: Getriebegehäuse
- 10: Planetenträger

- 12: Retarder
- 13: Ölversorgung für Retarder
- 14: Eingangswelle
- 15: Ausgangswelle
- 16.1, 16.2: Hilfsantriebswellen
- 17: Überlagerungsgetriebe
- 18: Planetengetriebe
- 19: Ventil zum Füllen des Retarders
- 20, 21, 22: Drehzahlsensoren

- 30: Schmierölleitung zum Retarder
- 31: Rücklaufleitung
- 32: Zwischenleitung
- 33: Ablaufleitung
- 34: Ölsumpf
- 35: Zulaufleitung
- 36: Rücklaufdrossel
- 37: Rückschlagventil
- 40: Schmierölsystem
- 41: Schmierölpumpe
- 42: Schmierölwärmetauscher
- 43: Schmierölfilter

- 50: Netz
- 51: Energieversorgung Wechselrichter
- 52, 53: Wechselrichter für Hilfsantriebe
- 54: Schaltvorrichtung für Hauptantriebsmaschine

## Patentansprüche

1. Antriebsvorrichtung umfassend ein Überlagerungsgetriebe (17), eine Hauptantriebsmaschine (2), die mit einer Eingangswelle (14) des Überlagerungsgetriebes verbunden ist, einen oder mehrere Hilfsantriebe (3.1,3.2), einen hydrodynamischen Retarder (12) zum Abbremsen des Hilfsantriebes (3.1,3.2) und eine Ausgangswelle (15) des Überlagerungsgetriebes, die mit einer Arbeitsmaschine (1) verbunden werden kann, wobei das Überlagerungsgetriebe (17) ein Planetengetriebe (18) aufweist mit einem Hohlrad (4), einem Sonnenrad (7), einem Planetenträger (10) und mehreren Planetenrädern (5), wobei die Eingangswelle (14) mit dem Hohlrad (4), die Ausgangswelle (15) mit dem Sonnenrad (7) und der oder die Hilfsantriebe (3.1,3.2) über zumindest je eine Getriebestufe mit konstanter Übersetzung mit dem Planetenträger (10) verbunden sind und wobei der Retarder (12) mit einem Hilfsantrieb (3.1, 3.2) verbunden ist, **dadurch gekennzeichnet,**
**dass** der Retarder (12) parallel in ein für die Antriebsvorrichtung vorhandenes Schmierölsystem (40) eingebunden ist, derart dass die Vorrichtung eine Zulaufleitung (35) umfasst, die von diesem Schmierölsystem (40) abzweigt und zum Retarder (12) führt, und eine Rücklaufleitung (31) umfasst, die vom Retarder (12) zum Schmierölsystem (40) führt und in dieses mündet, und wobei in der Zulaufleitung (35) ein Ventil (19) vorgesehen ist, derart dass es bei Schnellabschaltung oder Ausfall der Energieversorgung eines der Antriebe (2,3.1,3.2) die Zulaufleitung (35) freigeben kann und somit der Retarder (12) mit Öl gefüllt werden kann.

2. Vorrichtung nach Anspruch 1
**dadurch gekennzeichnet,**
**dass** das Ventil (19) zwei Schaltstellungen aufweist, eine erste, bei der die Zulaufleitung (35) zum Retarder gesperrt ist und eine zweite Schaltstellung, bei der die Zulaufleitung (35) zum Retarder freigegeben ist, wobei das Ventil (19) so ausgeführt ist, dass es im Normalbetrieb in der ersten Schaltstellung ist und bei Ausfall oder Unterbrechung der Energieversorgung des Ventils in die zweite Schaltstellung geht.

3. Vorrichtung nach Anspruch 1 oder 2
**dadurch gekennzeichnet,**
**dass** das Ventil (19) als ein 2-2-Wegeventil ausgeführt ist und eine Rückstellfeder aufweist.

4. Vorrichtung nach einem der vorherigen Ansprüche
**dadurch gekennzeichnet,**
**dass** in der Rücklaufleitung (31) zumindest eine einstellbare Drossel und/oder zumindest ein Rückschlagventil (37) vorhanden ist.

5. Vorrichtung nach einem der vorherigen Ansprüche
**dadurch gekennzeichnet,**
**dass** das Überlagerungsgetriebe (17) ein Getriebegehäuse (9) aufweist, wobei der Retarder (12) außerhalb des Getriebegehäuses (9) angeordnet ist.

6. Vorrichtung nach einem der vorherigen Ansprüche
**dadurch gekennzeichnet,**
**dass** der Retarder (12) derart mit dem Hilfsantrieb (3.1,3.2) verbunden ist, dass er die gleiche Drehzahl wie der Hilfsantrieb (3.1,3.2) hat.

7. Vorrichtung nach einem der vorherigen Ansprüche
**dadurch gekennzeichnet,**
**dass** eine Zwischenleitung (32) vorhanden ist, die die Zulaufleitung (35) vor dem Ventil (19) mit der Rücklaufleitung (31) derart verbindet, dass während des Betriebs der Antriebsvorrichtung dauerhaft etwas Öl durch die Zwischenleitung (32) strömen kann, auch wenn der Retarder (12) nicht aktiviert ist, wobei in der Zwischenleitung (32) bevorzugt eine Drossel vorgesehen ist.

8. Vorrichtung nach einem der vorherigen Ansprüche
**dadurch gekennzeichnet,**
**dass** der Retarder (12) mit einer Ablaufleitung (33) ausgestattet ist, über die Öl aus dem Retarder in einen Ölsumpf (34) abgelassen werden kann.

9. Vorrichtung nach einem der vorherigen Ansprüche
**dadurch gekennzeichnet,**
**dass** zusätzlich zur Zulaufleitung (35) eine Schmierölleitung (30) zum Retarder vorgesehen ist, die so ausgeführt ist, dass dauerhaft während des Betriebs der Antriebsvorrichtung etwas Öl aus dem Schmierölsystem (40) durch den Retarder (12) fließt.

10. Vorrichtung nach einem der vorherigen Ansprüche
**dadurch gekennzeichnet,**
**dass** im Leitungsstück des Schmierölsystems (40) zwischen dem Abzweig der Zulaufleitung (35) aus dem Schmierölsystem (40) und der Mündung der Rücklaufleitung (31) in das Schmierölsystem (40) eine Drossel (44) vorhanden ist.

11. Vorrichtung nach einem der vorherigen Ansprüche
**dadurch gekennzeichnet,**
**dass** eine Schmierölpumpe (41) im Schmierölsystem (40) vorhanden ist, die derart mit einer der Wellen der Antriebsvorrichtung mechanisch gekoppelt ist, insbesondere mit einer der Wellen (14,15,16.1,16.2) des Planetengetriebes (18), dass sie auch bei Ausfall oder Unterbrechung der Energieversorgung für die Antriebsvorrichtung weiter angetrieben wird, solange sich die Welle dreht, und dadurch die Ölversorgung (13) des Retarders füllen kann.

12. Vorrichtung nach einem der Ansprüche 1 bis 10
**dadurch gekennzeichnet,**
**dass** eine Schmierölpumpe (41) im Schmierölsystem (40) vorhanden ist, die mit einem Motor mit einer unterbrechungsfreien Stromversorgung verbunden ist, so dass sie auch bei Ausfall oder Unterbrechung der Energieversorgung für die Antriebsvorrichtung weiter angetrieben wird und dadurch die Ölversorgung (13) des Retarders füllen kann.

## Claims

1. Drive device comprising a superposition transmission (17), a main drive machine (2) which is connected to an input shaft (14) of the superposition transmission, one or more auxiliary drives (3.1,3.2), a hydrodynamic retarder (12) for braking the auxiliary drive (3.1,3.2) and an output shaft (15) of the superposition transmission, which output shaft can be connected to a work machine (1), wherein the superposition transmission (17) has a planetary transmission (18) with a ring gear (4), a sun gear (7), a planet carrier (10) and a plurality of planet gears (5), wherein the input shaft (14) is connected to the ring gear (4), the output shaft (15) is connected to the sun gear (7), and the one or more auxiliary drives (3.1,3.2) are connected by means of at least one transmission stage with a constant transmission ratio to the planet carrier (10), and wherein the retarder (12) is connected to an auxiliary drive (3.1, 3.2), **characterized**
**in that** the retarder (12) is incorporated into a lubricating oil system (40), which is provided for the drive device, in parallel in such a manner that the device comprises a feed line (35), which branches off from said lubricating oil system (40) and leads to the retarder (12), and comprises a return line (31), which leads from the retarder (12) to the lubricating oil system (40) and opens into the latter, and wherein a valve (19) is provided in the feed line (35) such that it can release the feed line (35) in the event of a fast shutdown or failure of the energy supply of one of the drives (2,3.1,3.2) and therefore the retarder (12) can be filled with oil.

2. Device according to Claim 1,
**characterized**
**in that** the valve (19) has two switching positions, a first, in which the feed line (35) to the retarder is blocked, and a second switching position, in which the feed line (35) to the retarder is released, wherein the valve (19) is designed in such a manner that it is in the first switching position during normal operation and passes into the second switching position in the event of failure or interruption of the energy supply of the valve.

3. Device according to Claim 1 or 2,
**characterized**
**in that** the valve (19) is designed as a 2-2 way valve and has a restoring spring.

4. Device according to one of the preceding claims, **characterized**
**in that** at least one adjustable throttle and/or at least one nonreturn valve (37) are/is provided in the return line (31).

5. Device according to one of the preceding claims, **characterized**
**in that** the superposition transmission (17) has a transmission housing (9), wherein the retarder (12) is arranged outside the transmission housing (9).

6. Device according to one of the preceding claims, **characterized**
**in that** the retarder (12) is connected to the auxiliary drive (3.1,3.2) in such a manner that the retarder has the same rotational speed as the auxiliary drive (3.1,3.2).

7. Device according to one of the preceding claims, **characterized**
**in that** an intermediate line (32) is provided which connects the feed line (35) upstream of the valve (19) to the return line (31) in such a manner that, during the operation of the drive device, some oil can flow permanently through the intermediate line (32) even if the retarder (12) is not activated, wherein a throttle is preferably provided in the intermediate line (32).

8. Device according to one of the preceding claims, **characterized**
**in that** the retarder (12) is equipped with a drain line (33) via which oil can be discharged from the retarder into an oil sump (34).

9. Device according to one of the preceding claims, **characterized**
**in that**, in addition to the feed line (35), a lubricating oil line (30) to the retarder is provided, which is designed in such a manner that some oil permanently flows out of the lubricating oil system (40) through the retarder (12) during the operation of the drive device.

10. Device according to one of the preceding claims, **characterized**
**in that** a throttle (44) is provided in the line segment of the lubricating oil system (40) between the branching off of the feed line (35) from the lubricating oil system (40) and the opening of the return line (31) into the lubricating oil system (40).

11. Device according to one of the preceding claims, **characterized**
**in that** a lubricating oil pump (41) is provided in the lubricating oil system (40), which lubricating oil pump is mechanically coupled to one of the shafts of the drive device, in particular to one of the shafts (14,15,16.1,16.2) of the planetary transmission (18), in such a manner that, even in the event of failure or interruption of the energy supply for the drive device, said lubricating oil pump continues to be driven as long as the shaft rotates, and can thereby fill the oil supply (13) of the retarder.

12. Device according to one of Claims 1 to 10,
**characterized**
**in that** a lubricating oil pump (41) is provided in the lubricating oil system (40), which lubricating oil pump is connected to a motor with an interruption-free power supply, and therefore, even in the event of failure or interruption of the energy supply for the drive device, said lubricating oil pump continues to be driven, and can thereby fill the oil supply (13) of the retarder.

## Revendications

1. Dispositif d'entraînement comprenant une boîte mixte (17), une machine d'entraînement principale (2), qui est reliée à un arbre d'entrée (14) de la boîte mixte, un ou plusieurs entraînements auxiliaires (3.1, 3.2), un ralentisseur hydrodynamique (12) pour freiner l'entraînement auxiliaire (3.1, 3.2) et un arbre de sortie (15) de la boîte mixte, qui peut être relié à une machine de travail (1), la boîte mixte (17) comportant un engrenage planétaire (18) comprenant une couronne (4), une roue solaire (7), un porte-satellites (10) et plusieurs roues planétaires (5), l'arbre d'entrée (14) étant relié à la couronne (4), l'arbre de sortie (15) étant relié à la roue solaire (7) et le ou les entraînements auxiliaires (3.1, 3.2) étant reliés chacun au porte-satellites (10) par l'intermédiaire d'au moins un étage de transmission à rapport constant, et le ralentisseur (12) étant relié à un entraînement auxiliaire (3.1, 3.2),
**caractérisé en ce que**
le ralentisseur (12) est intégré en parallèle dans un système d'huile de lubrification (40) présent pour le dispositif d'entraînement, de telle sorte que le dispositif comprend une conduite d'arrivée (35) qui part en dérivation de ce système d'huile de lubrification (40) et mène au ralentisseur (12), et comprend une conduite de retour (31), qui mène du ralentisseur (12) au système d'huile de lubrification (40) et débouche dans celui-ci, et une soupape (19) étant prévue dans la conduite d'arrivée (35), de telle sorte qu'en cas d'arrêt rapide ou de défaillance de l'alimentation en énergie d'un des entraînements (2, 3.1, 3.2), elle peut libérer la conduite d'arrivée (35) et peut ainsi remplir le ralentisseur (12) d'huile.

2. Dispositif selon la revendication 1,
**caractérisé en ce que**
la soupape (19) présente deux positions de commutation, une première à laquelle la conduite d'arrivée (35) vers le ralentisseur est fermée et une deuxième position de commutation à laquelle la conduite d'arrivée (35) vers le ralentisseur est libérée, la soupape (19) étant réalisée de telle sorte qu'elle est dans la première position de commutation en fonctionnement normal et passe dans la deuxième position de commutation en cas de défaillance ou d'interruption de l'alimentation en énergie de la soupape.

3. Dispositif selon la revendication 1 ou 2,
**caractérisé en ce que**
la soupape (19) est réalisée sous la forme d'une soupape à 2-2 voies et présente un ressort de rappel.

4. Dispositif selon l'une quelconque des revendications précédentes,
**caractérisé en ce que**
au moins un étranglement réglable et/ou au moins un clapet anti-retour (37) est présent dans la conduite de retour (31).

5. Dispositif selon l'une quelconque des revendications précédentes,
**caractérisé en ce que**
la boîte mixte (17) présente un boîtier de transmission (9), le ralentisseur (12) étant agencé à l'extérieur du boîtier de transmission (9).

6. Dispositif selon l'une quelconque des revendications précédentes,
**caractérisé en ce que**
le ralentisseur (12) est relié à l'entraînement auxiliaire (3.1, 3.2) de telle sorte qu'il a la même vitesse de rotation que l'entraînement auxiliaire (3.1, 3.2) .

7. Dispositif selon l'une quelconque des revendications précédentes,
**caractérisé en ce que**
une conduite intermédiaire (32) est présente, qui relie la conduite d'arrivée (35) avant la soupape (19) à la conduite de retour (31) de telle sorte que, pendant le fonctionnement du dispositif d'entraînement, un peu d'huile peut s'écouler en permanence dans la conduite intermédiaire (32) même lorsque le ralentisseur (12) n'est pas activé, un étranglement étant de préférence prévu dans la conduite intermédiaire (32).

8. Dispositif selon l'une quelconque des revendications précédentes,
**caractérisé en ce que**
le ralentisseur (12) est équipé d'une conduite d'évacuation (33), par l'intermédiaire de laquelle de l'huile peut être évacuée du ralentisseur dans un carter d'huile (34).

9. Dispositif selon l'une quelconque des revendications précédentes,
**caractérisé en ce que**
en plus de la conduite d'arrivée (35), une conduite d'huile de lubrification (30) vers le ralentisseur est prévue, qui est réalisée de telle sorte qu'un peu d'huile provenant du système d'huile de lubrification (40) traverse le ralentisseur (12) en permanence pendant le fonctionnement du dispositif d'entraînement.

10. Dispositif selon l'une quelconque des revendications précédentes,
**caractérisé en ce que**
un étranglement (44) est prévu dans le tronçon de conduite du système d'huile de lubrification (40) entre la dérivation de la conduite d'arrivée (35) du système d'huile de lubrification (40) et l'embouchure de la conduite de retour (31) dans le système d'huile de lubrification (40).

11. Dispositif selon l'une quelconque des revendications précédentes,
**caractérisé en ce que**
une pompe d'huile de lubrification (41) est présente dans le système d'huile de lubrification (40), laquelle est couplée mécaniquement à un des arbres du dispositif d'entraînement, en particulier à un des arbres (14, 15, 16.1, 16.2) de l'engrenage planétaire (18), de telle sorte qu'elle continue d'être entraînée même en cas de défaillance ou d'interruption de l'alimentation en énergie du dispositif d'entraînement, tant que l'arbre tourne, et peut ainsi remplir l'alimentation en huile (13) du ralentisseur.

12. Dispositif selon l'une quelconque des revendications 1 à 10,
**caractérisé en ce que**
une pompe d'huile de lubrification (41) est présente dans le système d'huile de lubrification (40), qui est reliée à un moteur ayant une alimentation en courant sans interruption, de telle sorte qu'elle continue d'être entraînée même en cas de défaillance ou d'interruption de l'alimentation en énergie du dispositif d'entraînement, et peut ainsi remplir l'alimentation en huile (13) du ralentisseur.
